# EUROPEAN PATENT APPLICATION

(11) **EP 3 798 665 A1**
(43) Date of publication of application: **31.03.2021**
(21) Application number: 19199918.4
(22) Date of filing: 26.09.2019
(51) Int. Cl.: G01S 7/00, G01S 13/87, G01S 13/89, G01S 13/931, G01S 13/86

(54) **METHOD AND SYSTEM FOR ALIGNING RADAR DETECTION DATA**

(71) Applicant: Zenuity AB, 417 56 Göteborg (SE)
(72) Inventor: HANSSON, Anders, 413 14 Göteborg (SE); RUNDSTEDT, Karl, 413 18 Göteborg (SE)
(74) Representative: Zacco Sweden AB

(57) **Abstract**

A method, a non-transitory computer-readable storage medium, a system and a vehicle for aligning radar detection data from a vehicle are disclosed. Radar detection data are obtained representing radar detections over a period of time and a set of clusters is identified based on the radar detection data using a clustering algorithm. A first set of point representations for the set of clusters are then determined, wherein each cluster of the set of clusters is represented with a separate point. The first set of point representations of the set of clusters are then aligned with a second set of point representations.

## Description

### TECHNICAL FIELD

The present invention relates to a method and a system for aligning radar detection data with a high-definition digital map.

### BACKGROUND

Today, many vehicles have a variety of driver support functions in the form of advanced driver assistance systems (ADAS) features. Also, many of these features form a basis for current and future autonomous drive (AD) features. Examples of ADAS features include lane departure warning systems, lane centring, lane keeping aid, pilot assist, lane change assistance, parking sensors, pedestrian protection systems, blind spot monitors, adaptive cruise control (ACC), antilock braking systems, and so forth. These features supplement the traditional driver control of the vehicle with one or more warnings or automated actions in response to certain scenarios.

One of the most important challenges in pursuit of enhancing ADAS systems and for achieving truly AD vehicles is the problem of mapping including e.g. digital map creation and localizing a vehicle on a digital map. This challenge has been addressed by using sensors on a vehicle sensing the environment and creating a spatial model of the physical environment surrounding the vehicle. Typically, the spatial models capture features such as lane markings, traffic signs, guard rails, or other landmarks that are useful for accurate localization. Such spatial models are sometimes referred to as high-definition (HD) digital maps. In presently known methods and systems, map creation and localization may be partly based on positioning information from a global navigation satellite system (GNSS). However, as GNSS positioning is limited by the relatively low accuracy (e.g. within 50 m) the further methods and systems are required to increase accuracy e.g. in map creation, updating of maps and localization of a vehicle.

### SUMMARY

An object of the present disclosure is to provide a method, a non-transitory computer-readable storage medium, a system and a vehicle, which seek to mitigate, alleviate, or eliminate one or more of the above-identified deficiencies in the art and drawbacks of presently known systems and methods.

This object is achieved by a method, a non-transitory computer-readable storage medium, a system and a vehicle as defined in the appended claims. The term exemplary is in the present context to be understood as an instance, example or illustration.

According to a first aspect of the present disclosure, there is provided a method for aligning radar detection data from a vehicle. Radar detection data are obtained representing radar detections over a period of time and a set of clusters is identified based on the radar detection data using a clustering algorithm. A first set of point representations for the set of clusters are then determined, wherein each cluster of the set of clusters is represented with a separate point. The first set of point representations of the set of clusters are then aligned with a second set of point representations.

By means of the proposed method, alignment of radar detection data can be easier achieved and with higher precision as compared to presently known systems and methods.

The present disclosure is at least partly based on the realization that it would be advantageous to reduce the number of data points in radar detection data in order to simplify alignment of radar detection data with a high-definition digital map. Thus, the inventor has realized that, in addition to identifying a set of clusters based on the radar detection data, the set of clusters e.g. relating to physical features in the environment surrounding the vehicle, point representations are determined for the set of cluster, wherein each cluster of the set of clusters is represented with a separate point. Using such point representations will enable easier alignment of the radar detection data with the high-definition digital map, and an alignment with higher precision.

A point representation of a cluster can be determined in several different ways. One example would be to determine a centre of gravity of the cluster and use this as the point representation.

Aligning the radar detection data with higher precision and enabling easier alignment is advantageous. For example, if the second set of point representations relate to a high definition map, this enables better and easier localisation of the vehicle on a high-definition digital map and/or enhanced possibility to update the high-definition digital map in relation to the radar detection data. If the second set of point representations relate to a different vehicle, such as point representations of clusters identified for corresponding radar detection data of the different vehicle, this enables better and easier combination of the point representations of the first set of point representations and the second set of point representations (and optionally from further sets of point representations from further vehicles) e.g. for probe-sourcing of data for building or updating a high-definition digital map.

Aligning the radar detection data generally means moving the radar detection data in relation to a position, e.g. identified using a GNSS using a consumer-grade GPS receiver in order for them to be aligned in relation some other relevant data.

A vehicle in the present context may be any type of road vehicle, such as e.g. a car, a bus, a truck, etc. for which radar detection data can be obtained.

According to an exemplary embodiment of the present disclosure, the method of the first aspect further comprises identifying a first sub-set of clusters of the set of clusters, and identifying a second sub-set of clusters of the set of clusters. The first sub-set of clusters and second sub-set of cluster identified are such that point representations of clusters of the first sub-set are less relevant for alignment than point representations of clusters of the second sub-set. The point representations of the clusters of the second sub-set of clusters are provided higher weight in aligning than the point representations of the clusters of the first sub-set of clusters. A cluster being less relevant for alignment does not mean that it is less relevant in all respects. For example, a cluster may be less relevant for alignment in longitudinal direction but just as relevant as clusters of the second sub-set for alignment in lateral direction.

By identifying a first sub-set of clusters with point representations less relevant for alignment and a second sub-set of clusters with point representations more relevant for alignment, the point representations of the second sub-set of clusters may be provided higher weight during alignment. Hence, an easier and more accurate alignment can be obtained.

In a further exemplary embodiment of the present disclosure the point representations of the clusters of the first sub-set of clusters form a pattern, and the point representations of the clusters of the second sub-set of clusters are non-uniform with the pattern.

One type of clusters which have been identified as being less relevant, or at least less useful, in alignment, is clusters with point representations that form a pattern. For such a type of clusters, it may be difficult to identify which point representation correspond to a point representation of a corresponding pattern in the high-definition digital map. This is particularly relevant when the pattern is recurring, such that a translation of an attempted alignment such that a point representation of the cluster part of the pattern will align with a next point representation in the corresponding pattern in the high-definition digital map will also provide a good alignment.

As an example, equidistant poles of a guardrail will constitute a pattern where it is difficult to identify where along a pattern of a second set of point representations the first point representation of clusters corresponding to the poles of the guardrail should be aligned. In such a case, it is beneficial to identify a first sub-set of clusters with point representations corresponding to a pattern consistent with the equidistant poles of the guardrail and to identify a second sub-set of clusters with point representations corresponding to other features than the poles of the guardrail, e.g. by identifying point representations that are non-uniform with the pattern, or in other words not part of the pattern. The point representations that are not part of the pattern are generally more relevant, or at least more useful, in alignment.

In a further exemplary embodiment of the present disclosure, the pattern is a polyline and the first sub-set of clusters is identified using polyline regression.

For example, a guardrail and its poles may be represented as a polyline.

In a further exemplary embodiment of the present disclosure, identifying the set of clusters comprises identifying a set of large clusters using the clustering algorithm with a first set of parameter values, and identifying the set of clusters based on the set of large clusters using the clustering algorithm with a second set of parameter values.

In an exemplary embodiment of the present disclosure, the set of large clusters are identified using the cluster algorithm having a first distance parameter value and a first number parameter value. The first distance parameter value indicates a first maximum distance between points in a cluster and the first number parameter value indicates a first minimum number of points required within the first maximum distance in a cluster. The set of clusters are identified using the cluster algorithm having a second distance parameter value and a second number parameter value. The second distance parameter value indicates a second maximum distance between points in a cluster and the second number parameter value indicates a second minimum number of points required within the first maximum distance in a cluster. The second distance parameter value is lower than the first distance parameter value and the second number parameter value is lower than the first number parameter value.

In a further exemplary embodiment of the present disclosure, obtaining radar detection data further comprises obtaining raw radar detection data representing radar detections over a period of time, and filtering the raw radar detection data by discarding detections violating a defined sensor model and detections identified as outliers.

In a further exemplary embodiment of the present disclosure, the defined sensor model restricts detections based on one or more of a minimum and maximum distance, a minimum and maximum azimuth, a minimum amplitude, and a maximum target velocity.

In a further exemplary embodiment of the present disclosure, a radar detection is identified as an outlier if the radar detection has few nearby neighbours.

In a further exemplary embodiment of the present disclosure, the second set of point representations relate to a high-definition digital map. In such exemplary embodiments, the method of the first aspect may further comprise updating the high-definition digital map based on the set of clusters and the aligning or localizing the vehicle on the high-definition digital map based on the aligning (or both).

Once the alignment has been performed, the result may be used for updating the high-definition digital map. For example, a point representation of the first set of point representations may be identified which has no corresponding point representation in the high-definition digital map. Such a point representation may relate a cluster corresponding to a feature in the surrounding environment of the vehicle which is not yet indicated in the high-definition digital map. The high-definition digital map may be updated in relation to the feature directly or the same identification has been repeated for a predetermined number of vehicles.

In a further exemplary embodiment of the present disclosure, the second set of point representations relate to radar detection data of a different vehicle.

The result may be used for combining the aligned first set of point representations for the vehicle and the second set of point representations for the different vehicle (and possibly further aligned point representations from further vehicles) to build/update a high-definition map (or both). For example, a point representation of the first set of point representations may be identified which has a corresponding point representation in the second set of point representations. Such a point representation may relate a cluster corresponding to a feature in the surrounding environment of the vehicle. A high-definition digital map may be updated in relation to the feature directly or the same identification has been repeated for a predetermined number of vehicles

According to a second aspect of the present disclosure, there is provided a non-transitory computer-readable storage medium storing one or more programs configured to be executed by one or more processors of a system, the one or more programs comprising instructions for performing the method of the first aspect. With this aspect of the disclosure, similar advantages and preferred features are present as in the previously discussed first aspect of the disclosure.

Embodiments of the non-transitory computer-readable storage medium according to the second aspect may for example include features corresponding to the features of any of the embodiments of the method according to the first aspect.

According to a third aspect of the present disclosure, there is provided a system comprising at least one processor and at least one memory. The at least one processor is configured to execute instructions stored in the memory causing the system to perform a method of the first aspect. With this aspect of the disclosure, similar advantages and preferred features are present as in the previously discussed first aspect of the disclosure.

Embodiments of the system according to the third aspect may for example include features corresponding to the features of any of the embodiments of the method according to the first aspect.

According to a fourth aspect of the present disclosure, there is provided a vehicle comprising the system of the third aspect. Embodiments of the vehicle according to the fourth aspect may for example include features corresponding to the features of any of the embodiments of the system according to the third aspect.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Figures 1a-c show illustrations of raw radar detection data, radar detection data after filtering, and radar detection data after outlier rejection, respectively, in relation to embodiments of the present disclosure.
Figures 2a-b show simplified illustrations of overlays of point representations of clusters determined from of radar detection data and point representations of features of a high-definition digital map before and after alignment, respectively.
Figures 3a-b is a flow-chart representation of a method for determining localization of a vehicle on a road in accordance with embodiments of the present disclosure.
Figure 4 is a schematic side view illustration of a vehicle comprising a system in accordance with embodiments of the present disclosure.
Figure 5 is a schematic diagram of a system in accordance with embodiments of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

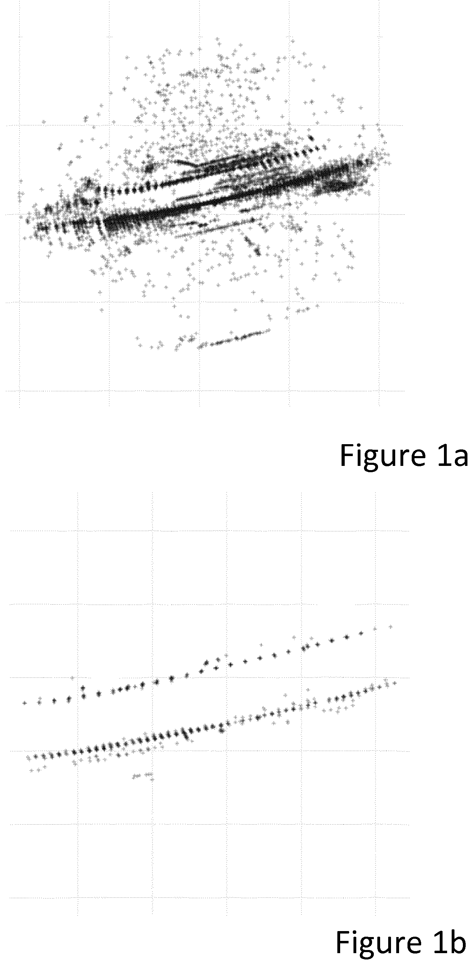

Figures 1a-c show illustrations of raw radar detection data, radar detection data after filtering, and the radar detection data after outlier rejection, respectively, of a vehicle in relation to embodiments of the present disclosure.

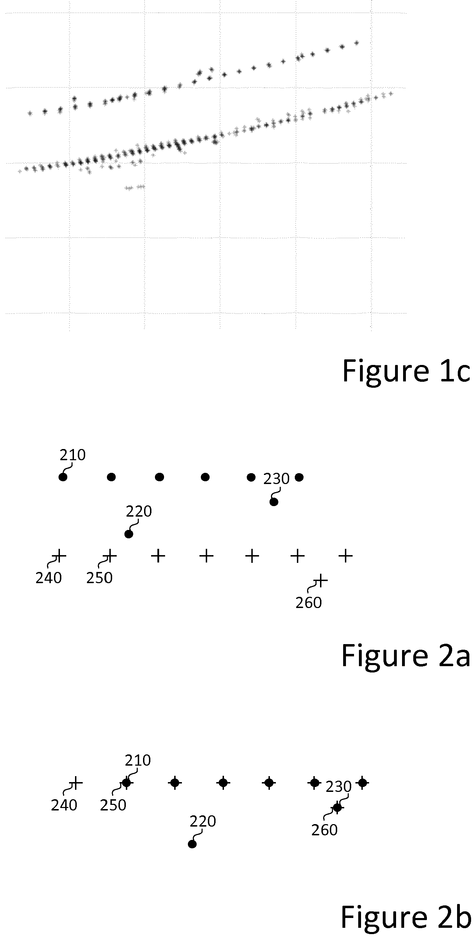

Figures 2a-b show simplified illustrations of overlays of a first set of point representations of clusters determined from radar detection data of a vehicle and second set of point representations of features of a high-definition digital map (or of a clusters determined from radar detection data of a different vehicle) before and after alignment, respectively.

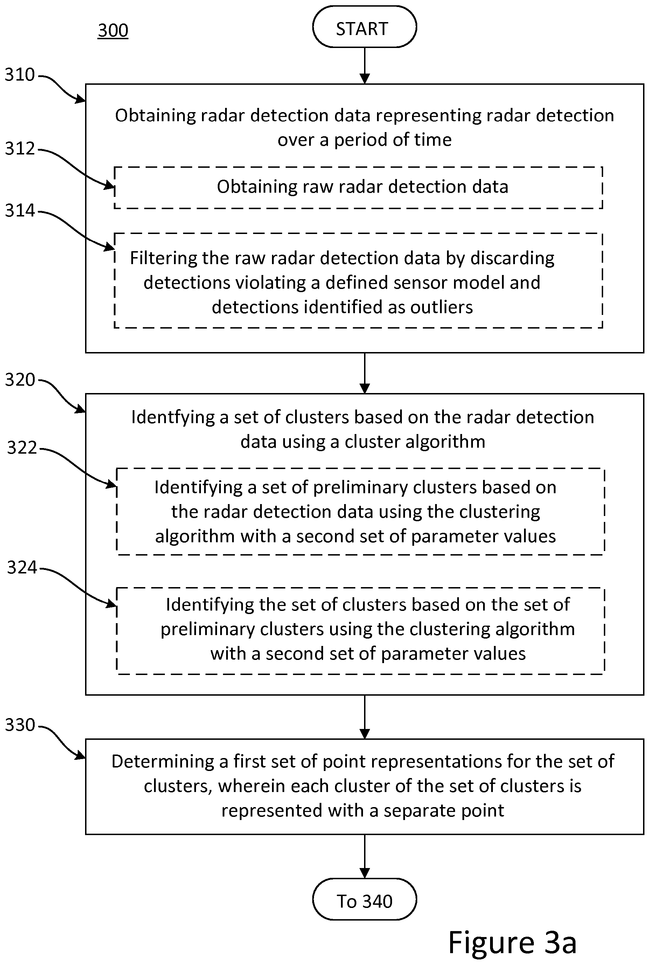

Figures 3a-b show a flow-chart representation of a method 300 for aligning radar detection data from a vehicle with a high-definition digital map in accordance with embodiments of the present disclosure.

Radar detection data are obtained (310) representing radar detections over a period of time.

The radar detection data may for example be obtained by obtaining (312) raw radar detection data representing radar detections from a radar sensor system of a vehicle over a period of time, and then obtaining the radar detection data by filtering (314) the raw radar detection data by discarding detections violating a defined sensor model and detections identified as outliers.

A single radar detection can be characterized by its (a) range, (b) azimuth angle, (c) amplitude, and (d) target velocity (which is directly related to the Doppler shift of the scattering object). Radar detections are buffered over a period of time, preferably short such as one second. The result of the buffering is raw radar detection data as illustrated in Figure 1a. Already in the raw radar data of Figure 1a it is possible to discern interesting objects such as guardrails, but the scene is very cluttered, and so as a first step noisy, uncertain and uninteresting detections should be cleaned from the raw radar detection data. Note that the purpose of data cleaning may be twofold. First, by removing cluttering noise it becomes easier to identify relevant objects in the subsequent processing steps. Second, data cleaning can drastically reduce the amount of data, and this would be critical for a probe-sourcing application in which data is transmitted (at a non-negligible cost) from a probing vehicle over an air interface to a compute cloud for further processing.

There are many ways to clean the raw radar detection data (e.g., estimate the signal-to-noise ratio and filter detections based on a signal-to-noise-ratio threshold, filtering based on a sensor model, etc.). Below follow examples of a few computationally inexpensive filters which can be viewed as a simples sensor model:
1. Discard detections whose range is outside a specified interval [r1, r2] (relative to where the radar sensor is mounted).
2. Discard detections whose azimuth is outside a specified interval [-θ, θ] (relative the radar sensor orientation).
3. In case a map of stationary objects should be created, detections that correspond to moving targets should be discarded. This can be done by discarding detections whose target velocity exceeds a specified threshold (possibly not zero, but a small value). Note that radar detections from semi-stationary objects-such as detections of a parked car-are not rejected. This type of dynamic map objects are handled in a later processing step.
4. Discard weak detections whose amplitude is below a specified threshold.
5. Finally, when the probing vehicle is standing still or driving at very low speed, there is typically a lot more scattering noise (compared with the amount of noise that is seen the vehicle is driving at a higher speed). One can easily reduce such noise with the help of another filterthat considers the speed of the probing vehicle and simply discards radar detections that are received when the vehicle speed is below a specified threshold.

Radar detection data after filtering based on the simple sensor model are illustrated in Figure 1b.

Depending on the application, all or a sub-set of the filters 1-5 can be applied.

As soon as less reliable radar detections have been discarded, it may be decided to use only the positions of the reliable detections. The position of a detection can be inferred from its range and its azimuth angle, and it can be expressed in longitude/latitude or in a local coordinate system. Dropping information about amplitude and target velocity effectively reduces the size of the radar data by a factor of two. Also, it may be decided not to represent the positions with full floating-point precision, which further keeps down the data payload.

After the filtering based on the simple sensor model as described hereinabove, some of the points will be rather isolated, and as such would likely not represent a reflection on any real landmark. Such outliers are preferably also filtered out. Generally, an outlier is defined as a point with few nearby neighbours.

Outlier filters may be computationally more expensive than the simple sensor model filters described hereinabove, and so it could preferably be implemented and run in the cloud. The effect of an outlier filter has been exemplified in Figure 1c. In this particular example, the fraction of detections that are classified as outliers in not significant. In general, however, it is a good idea to discard outliers since they can otherwise bias the process of identifying relevant map objects.

Radar detection data after filtering based also on the outlier filter (in addition to the filtering based on the simple radar sensor model) are illustrated in Figure 1c.

Turning back to Figure 3a. After obtaining (310) the radar detection data, a set of clusters is identified (320) based on the radar detection data using a clustering algorithm.

Identifying the set of clusters may comprise identifying (322) a set of large clusters based on the radar detection data using the clustering algorithm with a first set of parameter values, and identifying (324) the set of clusters based on the set of large clusters using the clustering algorithm with a second set of parameter values.

The set of large clusters may for example be identified using the clustering algorithm having a first distance parameter value and a first number parameter value. The first distance parameter value indicates a first maximum distance between points in a cluster and the first number parameter value indicates a first minimum number of points required within the first maximum distance in a cluster. The set of clusters may then be identified using the clustering algorithm having a second distance parameter value and a second number parameter value. The second distance parameter value indicates a second maximum distance between points in a cluster and the second number parameter value indicates a second minimum number of points required within the second maximum distance in a cluster. The second distance parameter value is lower than the first distance parameter value and the second number parameter value is lower than the first number parameter value.

Turning back to Figure 3a. After identifying (320) the set of clusters, a first set of point representations are determined (330) for the set of clusters, wherein each cluster of the set of clusters is represented with a separate point. One example would be to determine a centre of gravity of the cluster and use this as the point representation. Another example is to determine a geometric median of the cluster and use this as the point representation.

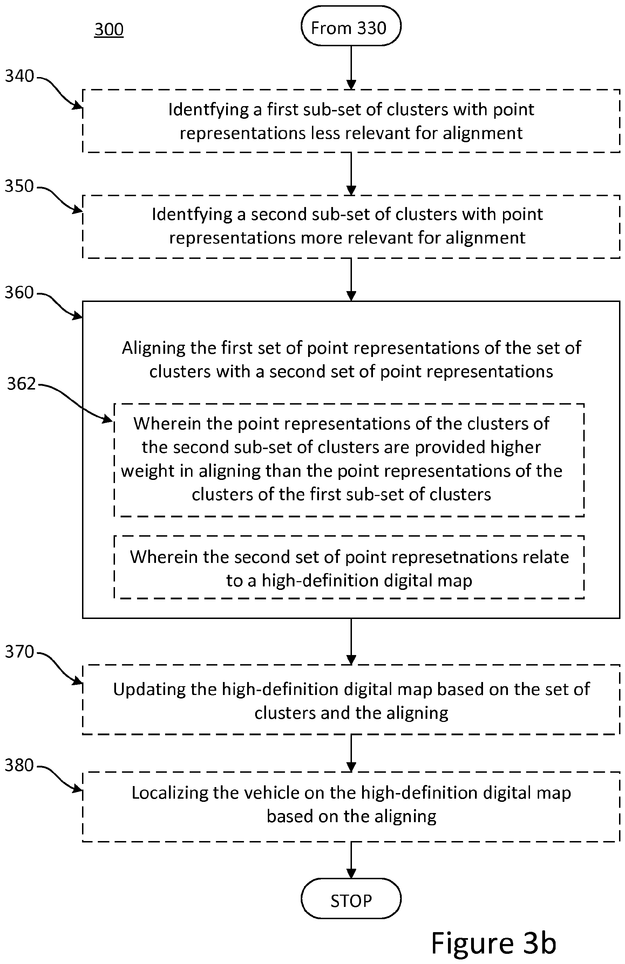

Turning to Figure 3b. A first sub-set of clusters is identified (340) and a second sub-set of clusters is identified (350). The first sub-set of clusters are clusters with point representations less relevant for alignment than point representations of clusters of the second sub-set of clusters. That the first sub-set of clusters are less relevant for alignment does not mean that they are less relevant in all respects. For example, the clusters of the first sub-set of clusters may be less relevant for alignment in longitudinal direction but just as relevant as clusters of the second sub-set of clusters for alignment in lateral direction. The point representations of the clusters of the first sub-set of clusters are provided lower weight in aligning than the point representations of the clusters of the second sub-set of clusters. The second sub-set of clusters are clusters with point representations more relevant for alignment than point representations of clusters of the first sub-set of clusters. The point representations of the clusters of the second sub-set of clusters are provided higher weight in aligning than the point representations of the clusters of the first sub-set of clusters. The point representations of the clusters of the second sub-set of clusters are also called interest points herein.

The point representations of the clusters of the first sub-set of clusters may for example be point representations that form a pattern, and the point representations of the clusters of the second sub-set of clusters are point representations that are non-uniform with the pattern, i.e. they do not form part of the pattern. For example, the pattern may be a polyline, such as for the guardrails (or barrier) shown in relation to Figure 1a-c. The first sub-set of clusters, corresponding to the guardrails, may then be represented with a polynomial with the help of RANSAC. As a by-product of RANSAC, the second sub-set of clusters are identified as outliers. Instead of a polynomial the first sub-set of clusters can be represented as a polyline (i.e., just connecting point representations with straight lines). This polyline can be further simplified with fewer straight lines using the Ramer-Douglas-Peucker algorithm. It may be assumed that guardrails are shaped like polynomials, while traffic signs and lamp poles may be placed close to a guardrail. In the RANSAC framework, detections from a guardrail will then be classified as inliers, while detections from traffic signs and/or lamp poles will be classified as outliers. It is to be noted that the outliers in this respect are in relation to the RANSAC framework and hence different from the outliers in relation to the outlier filter as described in relation to Figure 1c.

Clearly, as exemplified in Figure 1a-c, a single polynomial cannot always be fitted to all detections. In Figure 1c, for example, one polynomial should be fitted to the radar detection data relating to the upper guardrail and another polynomial to the radar detection data relating to the lower guardrail. Thus, before employing RANSAC with a polynomial regressor, points of the radar detection data should be divided into large clusters, which can be called super-clusters. The upper points in Figure. 1c belong to one super-cluster, while the lower points belong to another super-cluster. To identify super-clusters, DBSCAN is run with a large maximum distance threshold (say, one meter) and the minimum number of points required to form a dense region set to a fairly big number (such as 20).

To make a subsequent alignment efficient and robust, objects may first be identified by clustering points, once again with the help of DBSCAN. This time, a small distance threshold (say, 0.3 m) is used and the minimum number of points required to form a dense region is set to a small number (such as 5). As a result, individual poles along the guardrails are now classified as separate clusters. We can represent the clusters more succinctly with point representations, e.g. using their centroids.

Turning back to Figure 3b. The first set of point representations of the set of clusters are then aligned (360) with a second set of point representations of the high-definition digital map (or of a clusters determined from radar detection data of a different vehicle).

In Figure 1c the detections form distinct clusters that correspond to individual poles along two guardrails (or barriers), as well as a few clusters from what is most likely traffic signs and/or lamp poles. Clusters that arise from traffic signs and lamp poles are crucial in a subsequent alignment (or registration) step since they can be viewed as structural cues that help us to resolve a longitudinal ambiguity.

If two sets of point representations are to be aligned, a correspondence problem must first be solved, that is, for each point in one set of point representation the corresponding point in the other set of point representation must be decided. The two sets of point representations (firs set of point representations and second set of point representations) can for example relate to radar detection data in relation to two vehicles or radar detection data relating to one vehicle and data relating to a high-definition map. Furthermore, soft assignments may be used assigning a probability that there is a correspondence between any two points. In any case, Euclidean distance is normally a measure of how well two points correspond. Either a point is assigned to the nearest point in the reference cloud, or a Gaussian distribution is used to model the assignment probability. However, one problem is that initial positioning of the first set of point representations based on consumer-grade GPS receivers in vehicles is not very exact. It means that aligning with a high definition map or a second set of point representations in relation to a different vehicle - although similar in shape - can be separated several meters, and so the closest point is not necessarily a good match. Another problem is that there is no obvious correspondence between some points. This is because objects can be subject to occlusion from other cars - what is seen in one run is possibly not seen in another. Also, the high-definition maps generally do not identify all features of an environment and if temporal features, such as parked vehicles should be identified, such will at least initially not be identified in the high-definition map.

In Figures 2a-b, a first set of point representations of clusters determined from the radar data detection data are illustrated as filled circles and a second set of point representations of an high-definition digital map (or of a clusters determined from radar detection data of a different vehicle) are illustrated as plus shaped. A human will immediately associate the three rightmost points, which form two small triangles. Of the three points in each triangle, it is the lowermost point 230 of the first set of point representations and the lowermost point 260 of the second set of point representations that makes the association distinct. We declare this to be an interest point. If it had not been for the interest point, there are two natural associations. We can slide the first set of point representations one point in the longitudinal direction along the second set of point representations such that the first point 210 from the left of the first set of point representations and the first point 240 of the second set of point representations are aligned or such that that the first point 210 from the left of the first set of point representations and the second point 250 of the second set of point representations are aligned and still obtain the same perfect fit. Interest points are point representations of clusters that are more relevant (useful) for alignment and which should be provided higher weight in alignment.

Although the illustrations of Figures 2a-b are simplifications, they still capture the gist of problems in relation to alignment. Poles along guardrails are often equidistantly placed, and the curvature of most guardrails is not enough to pick out interesting points. Instead, detections that arise from traffic signs and lamp poles are critical since they add local structure that helps the registration process.

When a first set of point representations has been determined, we should align or register the first set of point representations with an already existing second set of point representations e.g. of a high-definition digital map, or in relation to radar detection data from a different vehicle. This step is required, e.g. due to GPS error and/or due to the GPS error being different for different probing vehicles.

The alignment problem may for example be solved with an Iterative Closest Point (ICP) algorithm, which is a powerful algorithm for calculating the displacement between point clouds. As already mentioned, one problem is to determine the correct data associations, and this is where the interest points introduced hereinabove become important. A weighting strategy may be adopted in which higher weights are put on interest points, i.e. points in the second sub-set of clusters, in the ICP scheme.

To further assist in making the correct associations, a local graph structure may be exploited which is embedded in the point clouds. Consider Figure 2a in which there are a different number of interest points in the two sets of point representations. The uppermost first set of point representations, i.e. the point representations of clusters determined from of radar detection data, has a first interest point 220 to the left and a second interest point 230 to the right. The lowermost second set of point representations, i.e. the point representations of clusters point representations of features of the high-definition digital map (or in relation to radar detection data of a second vehicle), has only one interest point 260. The correct association is between the second interest point 230 of the uppermost point cloud and the interest point 260 of the lowermost point cloud. By analysing the vertex degree and the distances to the nearest neighbours (which can be done efficiently by first building a k-d tree) we understand that the first interest point 220 of the uppermost point cloud and the interest point 260 of the lowermost point cloud is not a good match.

Once the first set of point representations has been aligned with an already existing high-definition digital map or with a second set of point representations relating to radar detection data of a different vehicle, information can be aggregated. A simple approach is to only save the intersection of the sets of objects. Notice, however, that there is a temporal aspects of the problem: when information is aggregated it seems reasonable to assign a lower confidence to objects that were seen a long time ago. In other words, there is a notion on how fresh the data is. We can formally handle this temporal aspect with the help of a feature persistence filter, see e.g. Rosen D.M., Mason, J., Leonard J.J., Towards lifelong feature-based mapping in semi-static environments, in 2016 IEEE International Conference on Robotics and Automation (ICRA), pp. 1063-1070 . Such a framework allows us to effectively remove semi-static radar objects from the map, such as a parked car that was only present for a relatively short period of time.

In alternative or in addition, the resulting aligning can be used for localizing the vehicle on the high-definition digital map.

Figures 3a-b comprise some steps that are illustrated in boxes with a solid border and some steps that are illustrated in boxes with a dashed border. The steps that are comprised in boxes with a solid border are operations that are comprised in the broadest example embodiment. The steps that are comprised in boxes with a dashed border are example embodiments that may be comprised in, or a part of, or are further operations that may be taken in addition to the operations of the border example embodiments. The steps do not all need to be performed in order and not all of the operations need to be performed. Furthermore, at least some of the steps may be performed in parallel.

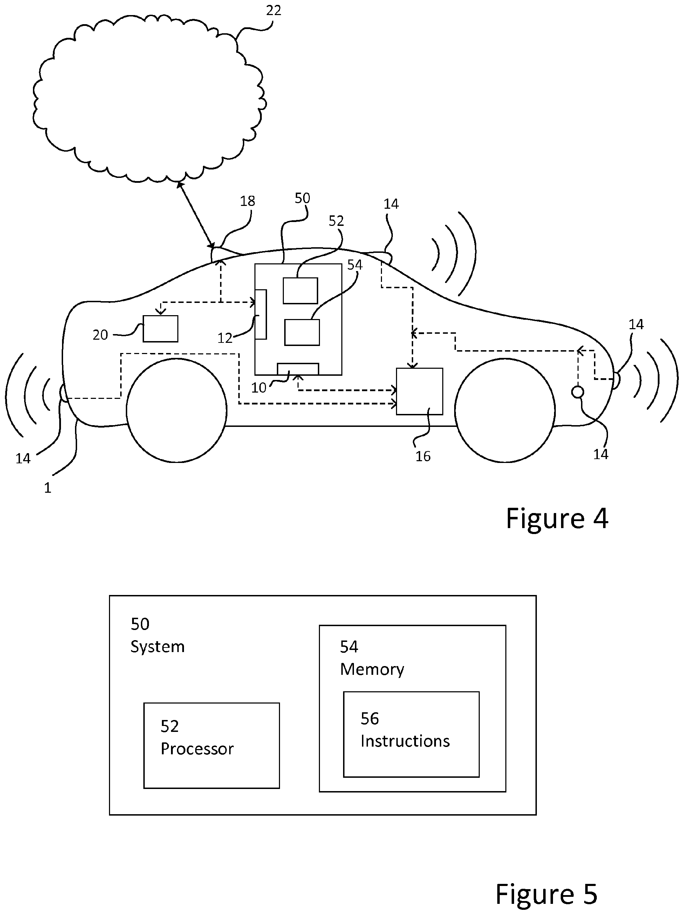

Figure 4 is a schematic side view illustration of a vehicle 1 comprising a system in accordance with an embodiment of the present disclosure.

The vehicle 1 has a sensor system comprising one or more radar sensors 14. The vehicle may include additional sensors (not shown) e.g. cameras and LIDARs, ultrasound transducers, etc.

The radar sensors 14 are configured to acquire information representative of a surrounding environment of the vehicle 1. In more detail, the radar sensors 14 acquire raw radar detection data relating amongst other to physical landmarks in the surrounding environment of the vehicle.

It should be appreciated that a sensor interface 10 may also provide the possibility to acquire sensor data directly (not shown) or via dedicated sensor control circuitry 16 in the vehicle 1. The communication/antenna interface 12 may further provide the possibility to send output to a remote location by means of an antenna 18. Moreover, some sensors 14 in the vehicle 1 may communicate with the system 50 using a local network setup, such as CAN bus, 12C, Ethernet, optical fibres, and so on. The communication/antenna interface 12 may be arranged to communicate with other control functions of the vehicle 1 and may thus be seen as control interface also. However, a separate control interface (not shown) may be provided. Local communication within the vehicle 1 may also be of a wireless type with protocols such as WiFi, LoRa, Zigbee, Bluetooth, or similar mid/short range technologies.

The system 50 further comprises a processor 52 configured to receive raw radar detection data from the sensor system, the raw radar detection data comprising information about the surrounding environment of the vehicle 1.

The vehicle 1 also comprises a localization system 20 configured to determine a map position of the vehicle 1 and an orientation of the vehicle 1. The map position and orientation can be determined based on data from a GNSS and the alignment of the radar detection data with the high-definition digital map.

Further, the vehicle 1 may be connected to an external network 22, e.g. for making use of cloud based or aided implementations. The processing in relation to performing the method according to the present disclosure can be made either in the processor of the vehicle, in a processor in the external network or partly in both. The connection from the vehicle 1 to the external network 22 may for example be via for instance a wireless link (e.g. for performing a part or all of the computations by means of remote resources) via the antenna 18. The same or some other wireless link may be used to communicate with other vehicles in the vicinity of the vehicle 1 or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

Figure 5 is a schematic diagram of system 50 in accordance with an embodiment of the present disclosure. The central control system at least one processor 52 and at least one memory 54. The processor is configured to execute instructions 56 stored in the memory 54 causing the central control system 50 to perform the method for aligning radar detection data from a vehicle with a high-definition digital map according to the disclosure and in particular according to the embodiments disclosed in relation to Figures 3a-b.

The system 50 may for example be manifested as a general-purpose processor, an application specific processor, a circuit containing processing components, a group of distributed processing components, a group of distributed computers configured for processing, a field programmable gate array (FPGA), etc. The system 50 may further include a microprocessor, microcontroller, programmable digital signal processor or another programmable device. The central control system 50 may also, or instead, include an application-specific integrated circuit (ASIC), a programmable gate array or programmable array logic, a programmable logic device, or a digital signal processor. Where the system 50 includes a programmable device such as the microprocessor, microcontroller or programmable digital signal processor mentioned above, the processor may further include computer executable code that controls operation of the programmable device.

The processor(s) 52 (associated with the system 50) may be or include any number of hardware components for conducting data or signal processing or for executing computer code (instructions 56) stored in memory 54. The memory 54 may be one or more devices for storing data and/or computer code for completing or facilitating the various methods described in the present description. The memory 54 may include volatile memory or non-volatile memory. The memory 54 may include database components, object code components, script components, or any other type of information structure for supporting the various activities of the present description. According to an exemplary embodiment, any distributed or local memory device may be utilized with the systems and methods of this description. According to an exemplary embodiment the memory 54 is communicably connected to the processor 52 (e.g., via a circuit or any other wired, wireless, or network connection) and includes computer code for executing one or more processes described herein.

Comprised in the system 50 may be a non-transitory computer-readable storage medium 54 storing one or more programs configured to be executed by one or more processors 52 of the system 50, the one or more programs comprising instructions 56 for causing the system 50 to perform the method according to the disclosure and in particular according to the embodiments disclosed in relation to Figures 3a-b.

The system of Figure 5 may either be located in a vehicle or in a system remote from the vehicle connected to the vehicle as disclosed in relation to Figure 4 or distributed between them. Thus, even if the system of Figure 5 is disclosed as a single system, this is only for illustrative purposes. The system may be distributed between the vehicle and the remote system such that processing in relation to performing the method according to the present disclosure can be made either in the processor of the vehicle, in a processor in the external network or partly in both.

Generally speaking, a computer-accessible medium may include any tangible or non-transitory storage media or memory media such as electronic, magnetic, or optical media - e.g., disk or CD/DVD-ROM coupled to computer system via bus. The term "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method for aligning radar detection data from a vehicle, the method comprising:
obtaining radar detection data representing radar detections over a period of time;
identifying a set of clusters based on the radar detection data using a clustering algorithm;
determining a first set of point representations for the set of clusters, wherein each cluster of the set of clusters is represented with a separate point; and
aligning the first set of point representations of the set of clusters with a second set of point representations.

2. The method of claim 1, further comprising:
identifying a first sub-set of clusters of the set of clusters; and
identifying a second sub-set of clusters of the set of clusters,
wherein point representations of clusters of the first sub-set are less relevant for alignment than point representations of clusters of the second sub-set, and wherein the point representations of the clusters of the second sub-set of clusters are provided higher weight in aligning than the point representations of the clusters of the first sub-set of clusters.

3. The method of claim 2, wherein the point representations of the clusters of the first sub-set of clusters form a pattern, and the point representations of the clusters of the second sub-set of clusters are non-uniform with the pattern.

4. The method of claim 3, wherein the pattern is a polyline and the first sub-set of clusters is identified using line fitting.

5. The method of any one of claims 1-4, wherein identifying the set of clusters comprises:
identifying a set of large clusters based on the radar detection data using the clustering algorithm with a first set of parameter values; and
identifying the set of clusters based on the set of large clusters using the clustering algorithm with a second set of parameter values.

6. The method of claim 5, wherein the set of large clusters are identified using the clustering algorithm having a first distance parameter value and a first number parameter value, wherein the first distance parameter value indicates a first maximum distance between points in a cluster and the first number parameter value indicates a first minimum number of points required within the first maximum distance in a cluster, and wherein the set of clusters are identified using the clustering algorithm having a second distance parameter value and a second number parameter value, wherein the second distance parameter value indicates a second maximum distance between points in a cluster and the second number parameter value indicates a second minimum number of points required within the second maximum distance in a cluster, wherein the second distance parameter value is lower than the first distance parameter value and the second number parameter value is lower than the first number parameter value.

7. The method of any one of claims 1-6, wherein obtaining radar detection data further comprises:
obtaining raw radar detection data representing radar detections over a period of time; and
obtaining the radar detection data by filtering the raw radar detection data by discarding detections violating a defined sensor model and detections identified as outliers.

8. The method of claim 7, wherein the defined sensor model restricts detections based on one or more of:
a minimum and maximum distance;
a minimum and maximum azimuth;
a minimum amplitude; and
a maximum target velocity.

9. The method of any one of claims 7 and 8, wherein a radar detection is identified as an outlier if the the radar detection has few nearby neighbours.

10. The method of any one of claims 1-9, wherein the second set of point representations relate to a high-definition digital map.

11. The method of claims 10, further comprising:
updating the high-definition digital map based on the set of clusters and the aligning.

12. The method of any one of claims 10 and 11, further comprising:
localizing the vehicle on the high-definition digital map based on the aligning.

13. The method of any one of claim 1-9, wherein the second set of point representations relate to radar detection data of a different vehicle.

14. A non-transitory computer-readable storage medium storing one or more programs configured to be executed by at least one processor of a system, the one or more programs comprising instructions for causing the system to perform the method according to any one of claims 1-9.

15. A system for aligning radar detection data from a vehicle, the system comprising:
at least one processor;
at least one memory;
wherein the at least one processor is configured to execute instructions stored in the memory causing the system to perform a method comprising:
obtaining radar detection data representing radar detections over a period of time;
identifying a set of clusters based on the radar detection data using a clustering algorithm;
determining a first set of point representations for the set of clusters, wherein each cluster of the set of clusters is represented with a separate point; and
aligning the first set of point representations of the set of clusters with a second set of point representations.

16. A vehicle comprising the system of claim 15.
